# EUROPEAN PATENT APPLICATION

(11) **EP 1 719 933 A1**
(43) Date of publication of application: **08.11.2006**
(21) Application number: 05704258.2
(22) Date of filing: 28.01.2005
(51) Int. Cl.: F16G 5/18

(54) **POWER TRANSMISSION CHAIN AND METHOD OF MANUFACTURING THE SAME, AND POWER TRANSMISSION DEVICE**

(30) Priority: 30.01.2004 JP 2004024053; 30.01.2004 JP 2004022776
(71) Applicant: JTEKT CORPORATION, Chuo-ku Osaka-shi Osaka 542-8502 (JP)
(72) Inventor: YASUHARA, Shinji, Nara 6391054 (JP); KAMAMOTO, Shigeo, Kashiwara-shi, Osaka 5820024 (JP); FUKUI, Nobuki, Nara 6391054 (JP); OKUMOTO, Masanori, Nara 6391123 (JP); FUSE, Masaru, Kashihara-shi, Nara 6340071 (JP)
(74) Representative: Sajda, Wolf E.
(86) International application number: PCT/JP2005/001260
(87) International publication number: WO 2005/073594

(57) **Abstract**

A power transmission chain of the invention includes: plural link plates individually including through-holes and arranged in a chain advancing direction and a chain widthwise direction and with predetermined spacing; and plural pins inserted through the through-holes for flexibly interconnecting the link plates. Since the link plates are arranged in the chain widthwise direction with the predetermined spacing, a respective pair of adjoining link plates are prevented from coming into friction contact with each other during the operation of the power transmission chain. Hence, the power transmission chain may be prevented from suffering the decrease of power transmission efficiency.

## Description

### Technical Field

The present invention relates to a power transmission chain for use in a continuously variable transmission for vehicles and a manufacture method thereof, as well as to a power transmission assembly using this power transmission chain.

### Background Art

One type of continuously variable transmission (CVT) for automotive vehicles includes, for example: a drive pulley disposed on an engine side; a driven pulley disposed on a drive-wheel side; and an endless power transmission chain entrained between these pulleys and including a plurality of link plates and a plurality of pins interconnecting these link plates. Such a continuously variable transmission of a so-called chain type transmits power by way of traction, which is produced by holding conical sheave surfaces of the individual pulleys in contact with a part of a chain component member, such as end faces of the pins of the chain, as allowing for a minor (micro) sliding movement of the chain component member in a circumferential direction of the sheave surfaces. The continuously variable transmission is designed to continuously vary a groove width (distance between the sheave surfaces) of at least one of the drive pulley and the driven pulley, thereby accomplishing stepless speed variations in such a smooth motion as not taken by a conventional gear-type transmission.
The power transmission chain used in such a chain-type continuously variable transmission has an arrangement such as disclosed in Japanese Unexamined Patent Publication No.312725/1996 wherein the link plates are arranged in a widthwise direction and a longitudinal direction thereof as mutually overlapped and are interconnected by means of the pins and strips press-fitted and loose fitted (or vice versa) in the through-holes of the link plates.

In the power transmission chain as described above, the link plates constituting the chain individually have the pins and strips press-fitted therein, so that adjoining link plates may not readily move relative to each other in an axial direction of the pin. Therefore, in a case where the adjoining link plates flexibly interconnected are assembled in mutually overlapping and contacting relation, the link plates flexibly interconnected are retained in the contacting relation after they are assembled to form the chain. The chain assembled in this state is detrimentally increased in flexion torque due to friction drag produced on contact surface between the adjoining link plates of the chain being flexed. Hence, the chain may suffer decreased power transmission efficiency.

In view of the foregoing, the invention has been accomplished and has an object to provide a power transmission chain adapted to suppress the decrease of power transmission efficiency, a manufacture method thereof, and a power transmission assembly employing this power transmission chain thereby suppressing the decrease of power transmission efficiency.

### Disclosure of the Invention

According to the invention for achieving the above object, a power transmission chain comprises: a plurality of link plates individually including through-holes and arranged in a chain advancing direction and a chain widthwise direction and with predetermined spacing; and a plurality of pins inserted through the through-holes for flexibly interconnecting the plural link plates.

According to the power transmission chain of the aforementioned arrangement, the plural link plates are provided with the spacing therebetween so that these link plates are prevented from contacting each other to produce the friction drag when the chain is flexed. Thus, the chain may be reduced in the flexion torque. Accordingly, the power transmission chain is capable of suppressing the decrease of power transmission efficiency.

It is preferred in the above power transmission chain that a synthetic resin member is interposed in the spacing.
In this case, the link plates adjoining each other in the chain widthwise direction are assuredly prevented from directly contacting each other. Therefore, these link plates are assuredly prevented from producing the friction drag by contacting each other.

A power transmission chain according to another aspect of the invention comprises: a plurality of link plates individually including through-holes, having their side surfaces covered by a coating material capable of being abraded or separated by using the chain, and arranged as mutually overlapped in a thicknesswise direction thereof; and a plurality of pins inserted through the through-holes for flexibly interconnecting the plural link plates.

According to the power transmission chain of the aforementioned arrangement, the side surfaces of the link plates are covered by the coating material capable of being abraded or separated by using the chain. Therefore, the coating material may be interposed between the contact surfaces of the link plates which are arranged as mutually overlapped in the thicknesswise direction thereof on their side surfaces and are flexibly interconnected. Therefore, even in a case where the link plates are assembled as mutually overlapped with high surface pressure to form the power transmission chain, the pressure on the contact surface between the link plates may be reduced to decrease the friction drag therebetween, because the flexed power transmission chain causes the side surfaces of the link plates to abrade against each other, thereby causing the coating material to be abraded or separated. Thus, the power transmission chain may be decreased in the flexion torque and hence, the decrease of power transmission efficiency may be suppressed.

It is preferred in the above power transmission chain that the coating material comprises a phosphate coating film. In this case, the phosphate coating film has a property of readily abrading away on its surface when subjected to sliding friction. Therefore, a small number of flexions of the link plates can cause the abrasion of the coating material. Accordingly, the contact surface pressure between the link plates may be quickly decreased by test-driving the chain, for example, whereby the friction drag therebetween may be reduced.

According to still another aspect of the invention, a method of manufacturing a power transmission chain including: a plurality of link plates individually including through-holes and arranged in a chain advancing direction and a chain widthwise direction; and a plurality of pins inserted through the through-holes for flexibly interconnecting the plural link plates, the method comprises: a layering step of layering the link plates as interposing a space regulating member between a respective pair of adjoining link plates; an interconnection step of interconnecting the plural link plates by inserting the pins through the through-holes; and a removal step of removing the space regulating members.

According to the manufacture method for power transmission chain of the aforementioned constitution, the space regulating member is interposed between a respective pair of adjoining link plates and thereafter, the link plates are interconnected by means of the pins. Subsequently, the space regulating members are removed. This facilitates the provision of the spacing between a respective pair of link plates. In addition, the width of the spacing may be easily adjusted by adjusting the thickness of the space regulating member.

According to still another aspect of the invention, a method of manufacturing a power transmission chain including: a plurality of link plates individually including through-holes and arranged as mutually overlapped in a thicknesswise direction thereof on their side surfaces; and a plurality of pins inserted through the through-holes for flexibly interconnecting the plural link plates, the method comprises: a coating step of coating the side surfaces of the plural link plates with a coating material capable of being abraded or separated by using the chain; a pin lay-out step of laying out the plural pins at a predetermined pitch; and an interconnection step of inserting the plural pins so arranged into the through-holes thereby sequentially interconnecting the link plates which are mutually overlapped on their side surfaces.

According to the manufacture method for power transmission chain of the aforementioned constitution, the side surfaces of the plural link plates are covered by the coating material and thereafter, the plural link plates are interconnected by means of the plural pins. Therefore, the coating material may be interposed between the contact surfaces of the link plates mutually overlapped and flexibly interconnected. Even in a case where the link plates are assembled as mutually overlapped with high surface pressure to form the power transmission chain, the pressure on the contact surface between the link plates may be reduced, because the flexed power transmission chain causes the side surfaces of the link plates to abrade against each other thereby causing the coating material to be abraded or separated. That is, the manufacture method for power transmission chain provides the power transmission chain adapted to suppress the decrease of power transmission efficiency.
The method also offers an advantage that even if the surface pressure between the adjoining link plates is increased, the increased surface pressure may be decreased by virtue of the coating material. Therefore, the power transmission chain may be assembled without finely adjusting the pressure and stroke to insert the pin through the through-holes. Accordingly, the power transmission chain may be assembled easily.

According to still another aspect of the invention, a method of manufacturing a power transmission chain including: a plurality of link plates individually including through-holes and arranged as mutually overlapped in a thicknesswise direction thereof on their side surfaces; and a plurality of pins inserted through the through-holes for flexibly interconnecting the plural link plates, the method comprises: a coating step of coating the side surfaces of the link plates with a coating material capable of being abraded or separated by using the chain; a link-plate lay-out step of laying out the plural link plates at predetermined positions and in overlapping relation with respect to the thicknesswise direction thereof; and an interconnection step of interconnecting the plural link plates located at the predetermined positions by inserting the pins through the through-holes.
In this case, the plural link plates may be collectively interconnected by inserting the pin through the plural link plates located at the predetermined positions and in overlapping relation. Accordingly, the power transmission chain may be assembled efficiently.

According to still another aspect of the invention, a power transmission assembly comprises: a first and a second pulley each possessing a pair of conical sheave surfaces opposing each other; and the aforesaid power transmission chain entrained between these pulleys and contacting the sheave surfaces for power transmission.
In this case, the power transmission assembly is adapted to suppress the decrease of power transmission efficiency because the aforesaid power transmission chain is employed. Furthermore, in a case where the spacing is provided between a respective pair of link plates adjoining each other in the chain widthwise direction, for example, the pin is allowed to move in the chain widthwise direction. Therefore, if misalignment occurs due to deviation between the relative positions of the first pulley and the second pulley, the pin may be moved (skewed) in the chain widthwise direction to accommodate the misalignment. As a result, the pin is prevented from pressing its corner against the corresponding sheave surface to cause abnormal wear of the pin and the sheave surface. Thus, the assembly may be dramatically increased in service life.

### Brief Description of the Drawings

- FIG. 1: is a perspective view schematically showing an essential part of a power transmission chain for use in chain-type continuously variable transmission according to a first embodiment of the invention;
- FIG. 2: is a sectional view of the essential part of the chain shown in FIG. 1;
- FIG. 3: is a sectional view showing a link plate, pins and strips of the chain;
- FIG. 4: is a sectional view taken on the line II-II in FIG. 2;
- FIG. 5: is a group of fragmentary sectional views of the chain for explaining a method of manufacturing the chain according to the first embodiment hereof, FIG. 5A showing how the pin and the strip are inserted into a through-hole of the link plate, FIG. 5B showing a state prior to the removal of a space regulating member, FIG. 5C showing a state after the removal of the space regulating member;
- FIG. 6: is a fragmentary sectional view of the chain for explaining another method of manufacturing the chain of the first embodiment hereof;
- FIG. 7: is a group of sectional views of the link plate for illustrating various modes of a synthetic-resin member 12 of the chain of the first embodiment hereof, FIG. 7A showing the synthetic-resin member covering the overall surface of the link plate, FIG. 7B showing the synthetic-resin member covering only a confronting surface on one side of the link plate, FIG. 7C showing the synthetic-resin member covering the confronting surfaces on the both sides of the link plate;
- FIG. 8: is a sectional view schematically showing an interconnection portion of a power transmission chain according to a second embodiment hereof;
- FIG. 9: is a schematic diagram for explaining a method of manufacturing the chain according to the second embodiment hereof and showing time course of the change in positional relation between a pin/strip pair and a guide pin in conjunction with the press-insertion of the pin into the through-hole of the link plate;
- FIG. 10: is a perspective view schematically showing an arrangement of an essential part of a chain-type continuously variable transmission according to a third embodiment hereof;
- FIG. 11: is a fragmentary enlarged sectional view of a drive pulley (driven pulley) and a chain of the chain-type continuously variable transmission shown in FIG. 10;
- FIG. 12A to FIG. 12C: are schematic side views of the drive pulley and driven pulley for illustrating misalignment; and
- FIG. 13A and FIG. 13B: are diagrams each showing a link plate formed with a communicating groove for intercommunicating two through-holes.

### Best Modes for Carrying Out the Invention

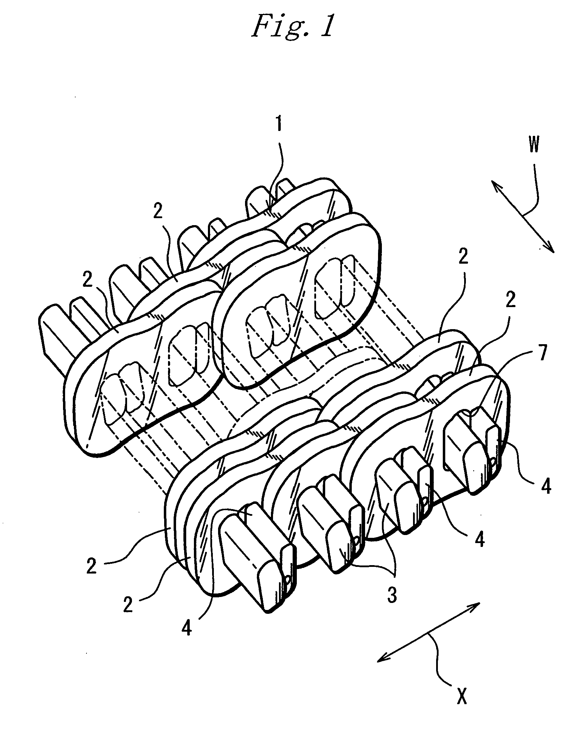

Preferred embodiments of the invention will be described with reference to the accompanying drawings. FIG. 1 is a perspective view schematically showing an arrangement of an essential part of a power transmission chain (hereinafter, also referred to simply as "chain") for use in chain-type continuously variable transmission according to a first embodiment of the invention. Referring to FIG. 1, a chain 1 includes: a plurality of link plates 2 arranged in a chain advancing (driving) direction X and in a chain widthwise direction W; a plurality of pins 3 for interconnecting these link plates 2; and a plurality of strips 4 slightly shorter than the pins 3.

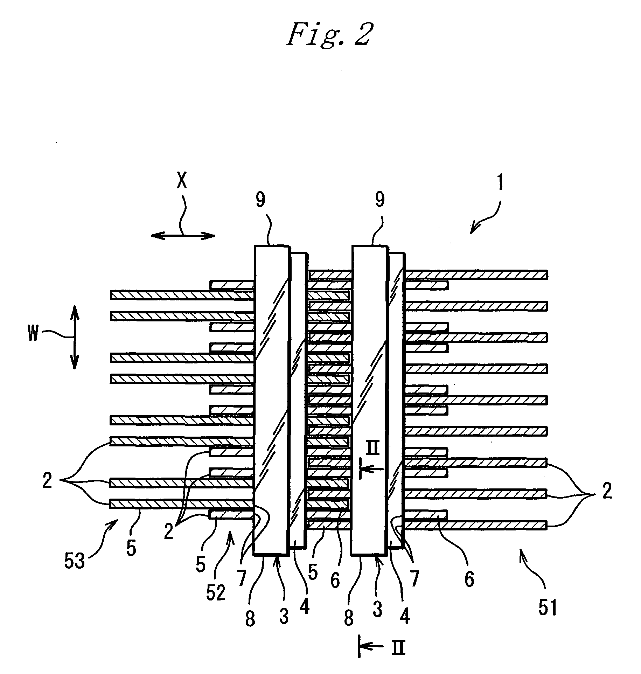

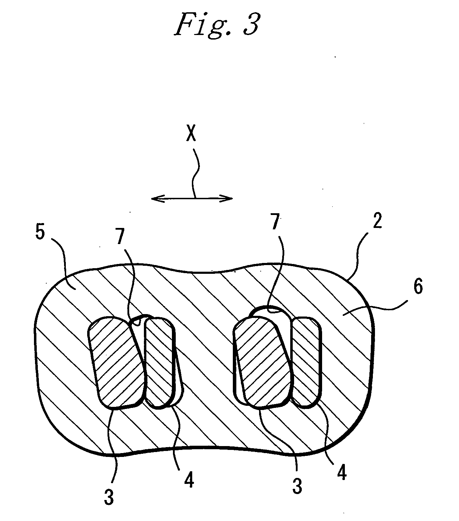

FIG. 2 is sectional view of the essential part of the chain 1 shown in FIG. 1. The figure shows three groups of link plates, each group including plural link plates located at the same position with respect to the chain advancing direction X. Specifically, the figure shows a first link-plate group 51, a second link-plate group 52 and a third link-plate group 53. FIG. 3 is a sectional view of the link plate 2, the pins 3 and the strips 4 of the chain 1. As shown in FIG. 2 and FIG. 3, each link plate 2 includes a pair of link ends 5, 6 arranged in the chain advancing direction X, whereas the link ends 5, 6 are formed with a through-hole 7, respectively.

The through-holes 7 at the link ends 5 of the link plates 2 of the first link-plate group 51 are aligned with the through-holes 7 at the link ends 6 of the link plates 2 of the second link-plate group 52 with respect to the chain widthwise direction W, while the pin 3 is inserted through these through-holes 7 thereby interconnecting the link plates 2 of the first and second link-plate groups 51, 52.
In one case, the pin 3 may be inserted through the through-hole 7 of the link plate 2 as press-fitted therein so as to be restricted from rotation relative to the link plate 2. In the other case, the pin 3 may be inserted through the through-hole 7 as loose-fitted therein to define a minor gap, thus being allowed for rotation relative to the link plate 2. For example, the pin 3 is press-fitted in the respective through-holes 7 at the link ends 5 of the link plates 2 of the first link-plate group 51 so as to be restricted from rotation relative to the respective link plates 2 of the first link-plate group 51, and is also loose-fitted in the respective through-holes 7 at the link ends 6 of the link plates 2 of the second link-plate group 52 so as to be allowed for rotation relative to the respective link plates of the second link-plate group 52.

Likewise, the through-holes 7 at the link ends 5 of the link plates 2 of the second link-plate group 52 are aligned with the through-holes 7 at the link ends 6 of the link plates 2 of the third link-plate group 53 with respect to the chain widthwise direction W, while the pin 3 is inserted through these through-holes 7 thereby interconnecting the link plates 2 of the second and third link-plate groups 52, 53. That is, the pin 3 is press-fitted in the respective through-holes 7 at the link ends 5 of the link plates 2 of the second link-plate group 52 and is also loose-fitted in the respective through-holes 7 at the link ends 6 of the link plates 2 of the third link-plate group 53.

Although not shown in the figure, the link plates 2 of the third group and the link plates 2 of the fourth group are subsequently interconnected. In this manner, two groups of link plates are interconnected in turn to form an endless chain 1 as a whole.
Opposite ends of the pin 3 project in the chain widthwise direction W from the link plates 2 located on the opposite sides of the chain with respect to the chain widthwise direction W. The opposite ends of the pin 3 define power transmission surfaces 8, 9 for contacting sheave surfaces. The pin 3 is formed from a high strength material such as bearing steel (e.g., SUJ2) because the pin is directly involved in power transmission by way of the power transmission surfaces 8, 9 thereof.

On the other hand, the strip 4 is a bar-like body formed in a slightly shorter length than the pin 3 such that the strip may not contact the sheave surfaces. In one case, the strip 4 may be inserted through the through-hole 7 as press-fitted therein so as to be restricted from rotation relative to the link plate 2. In the other case, the strip 4 may be inserted through the through-hole 7 as loose-fitted therein to define the minor gap, thus being allowed for rotation relative to the link plate 2.
For example, the strip 4 is loose-fitted in the respective through-holes 7 at the link ends 5 of the link plates of the first link-plate group 51 so as to be allowed for rotation relative to the link plates 2 of the first group 51, and is also press-fitted in the respective through-holes 7 at the link ends 6 of the link plates 2 of the second link-plate group 52 so as to be restricted from rotation relative to the link plates 2 of the second link-plate group 52.

According to the above arrangement, the strip 4 is adapted for rolling/sliding contact (contact including at least either one of the rolling contact and sliding contact) with the pin 3 inserted through the same through-hole 7. Thus, the link-plate groups adjoining each other in the chain advancing direction X (link plates located in adjoining relation) are flexibly interconnected, whereas the pin 3 is substantially restricted from rotation relative to the sheave surfaces of the pulleys. Thus, the chain is reduced in friction loss so as to ensure high power transmission efficiency.

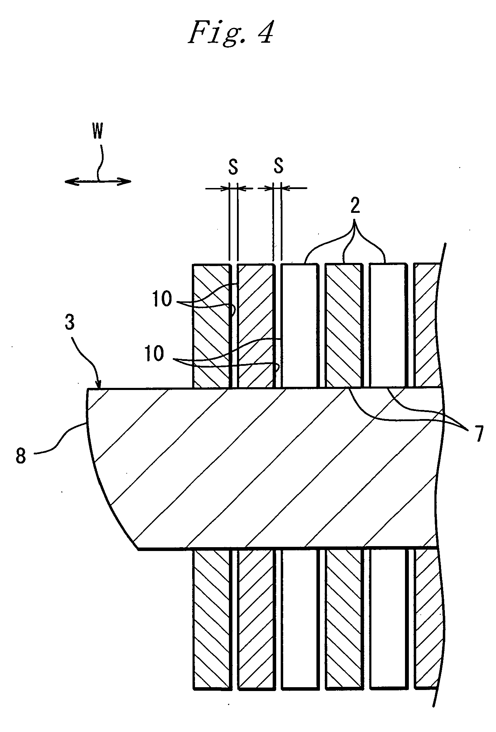

FIG. 4 is a sectional view taken on the line II-II in FIG. 2. Referring to FIG. 4, the feature of the embodiment consists in that a spacing S is provided between a respective pair of link plates 2 adjoining each other in the chain widthwise direction W, such as to obviate friction contact between the adjoining link plates 2, whereby the chain 1 is prevented from suffering the decrease of power transmission efficiency during operation.

Specifically, each pair of link plates 2 adjoining each other in the chain widthwise direction W include a pair of confronting surfaces 10 defined by face-to-face sides of the link plates, while the spacing S is defined between these confronting surfaces 10. This permits the pin 3 to be moved (skewed) by an amount corresponding to the spacing S in the chain widthwise direction W relative to its adjoining pin 3 (see FIG. 2) with respect to the chain advancing direction X. The spacing S is so defined as to provide the maximum skew amount in the range of, for example, 0.5mm to 1mm.

FIG. 5A to FIG. 5C are fragmentary sectional views for explaining a method of manufacturing the chain 1 of the embodiment. The chain 1 is manufactured by the following three steps, for example. Specifically, the steps include: a layering step of layering the link plates 2 in the chain widthwise direction W as interposing a space regulating member 11 between a respective pair of adjoining link plates 2; an interconnection step of interconnecting the plural link plates 2 by inserting the pin 3 and strip 4 through the through-holes 7 of these link plates 2; and a removal step of removing the space regulating member 11 from space between the above link-plate pair 2.

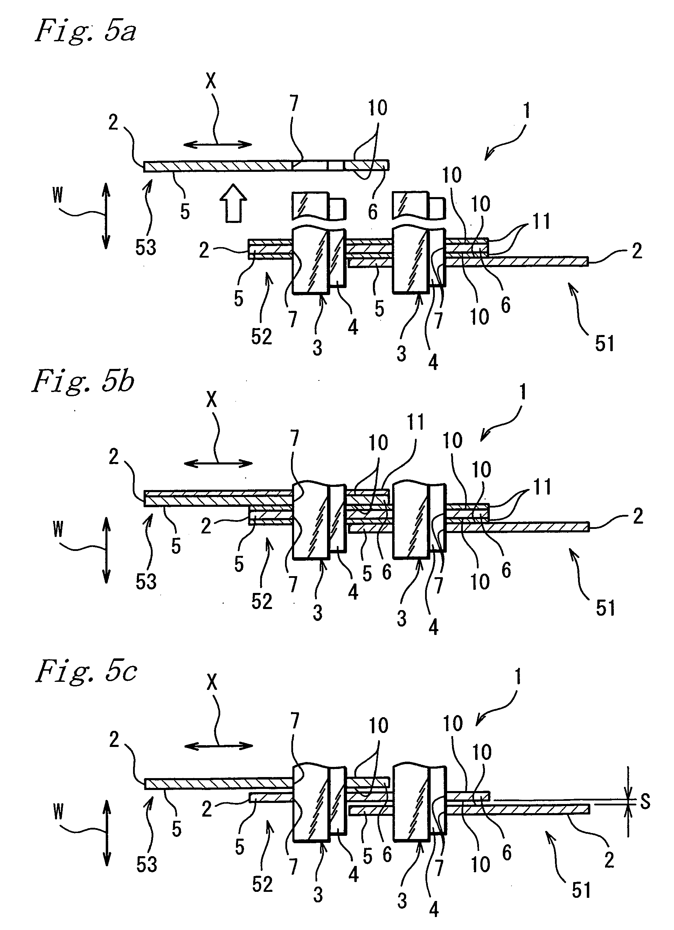

Specifically, the corresponding pin 3 and strip 4 are sequentially inserted through the through-holes 7 at the corresponding link ends 5, 6 of the corresponding link plates 2, as shown in FIG. 5A. In this process, the space regulating member 11 is interposed (sandwiched) between the pair of confronting surfaces 10 of the corresponding link plates 2 in adjoining relation with respect to the chain widthwise direction W.
Thus, the link plates 2 of two adjoining groups with respect to the chain advancing direction X (e.g., the link plates 2 of the first and second groups 51, 52) are layered along the chain widthwise direction W via the space regulating member 11, as shown in FIG. 5B.

The above space regulating member 11 is used for forming the spacing S between the link plates 2 adjoining each other in the chain widthwise direction W. The space regulating member may be formed from a soluble material such as paint, starch and cellulose or a material having high tensile strength, such as carbon steel and alloy steel.
Subsequently, the space regulating member 11 is removed from space between the corresponding link plates 2. Specifically, in a case where the space regulating member 11 is formed from the above soluble material, a solvent such as water, organic solvent or inorganic solvent is used to dissolve the space regulating member 11 whereby the space regulating member is removed from space between the adjoining link plates 2. In a case where the space regulating member 11 is formed from the material having the high tensile strength, the space regulating member 11 is drawn out so as to be removed from space between the adjoining link plates 2. Thus is obtained the chain 1 provided with the spacing between the respective pair of link plates adjoining each other in the chain widthwise direction W, as shown in FIG. 5C.

Alternatively, the plural link plates 2 may be previously layered in the chain widthwise direction W via the space regulating members 11 and then, the pin and strip 4 may be inserted collectively through the through-holes 7 at the corresponding link ends 5, 6 of these plural link plates 2.
According to the chain of the embodiment as described above, the spacing S is provided between the respective pair of link plates adjoining each other in the chain widthwise direction W, thereby preventing the link plates adjoining each other in the chain widthwise direction W from contacting each other to produce the friction drag when the chain 1 is flexed. Thus, the chain may be reduced in the flexion torque. Accordingly, the chain 1 may be prevented from suffering the decrease of power transmission efficiency.

In the manufacture of the chain 1, the spacing S may be readily formed simply by removing the space regulating member 11 after the press-insertion of the pin 3 and strip 4. In addition, the dimension of the spacing S may be readily adjusted by adjusting the thickness of the space regulating member 11.
In the manufacture of the chain 1 of the above embodiment, the spacing S may also be formed as follows. A painting process may be previously performed to form a paint film on at least one of the pair of confronting surfaces 10 of the corresponding link plates 2. After the press-insertion of the pin 3 and strip 4, the solvent such as water, organic solvent or inorganic solvent may be used to remove the paint film.

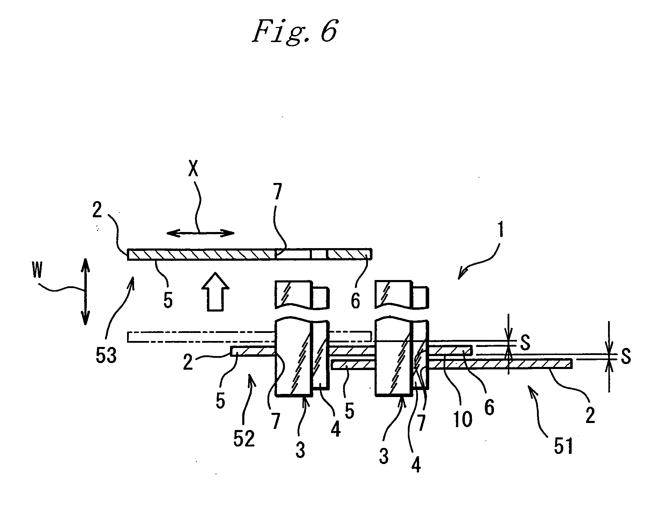

Alternatively, the spacing S may be provided by setting the amount of insertion (insertion stroke) of the pin 3 and strip 4 into the through-hole 7, as shown in FIG. 6. In this case, the stroke of an unillustrated press is so adjusted as to insert the pin 3 and strip 4 into the through-hole 7 in a manner to position the link plate 2 at a predetermined position (e.g., position P) with respect to the chain widthwise direction W.

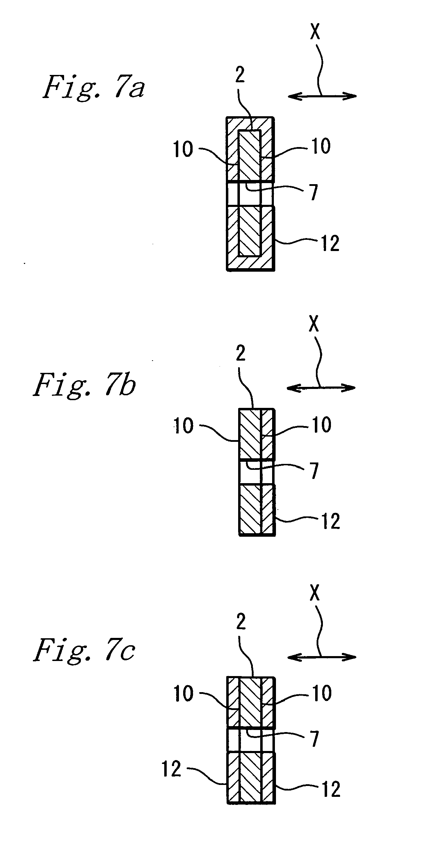

According to the above embodiment, a synthetic-resin member 12, such as shown in each of FIG. 7A to FIG. 7C, may also be interposed between a pair of link plates 2 adjoining each other in the chain widthwise direction W. The synthetic-resin member 12 is formed from a material, such as phenol, nylon and fluorine, and covers the confronting surface of each link plate 2. The synthetic-resin member 12 may cover the overall surface of each link plate 2 as shown in FIG. 7A, for example. As shown in FIG. 7B, the synthetic-resin member 12 may be formed only on one of the confronting surfaces of each link plate 2. Otherwise, the synthetic-resin member 12 may be formed on both of the confronting surfaces of each link plate 2, as shown in FIG. 7C.

In this case, the synthetic-resin member 12 may be formed to completely fill the corresponding spacing S. Alternatively, the synthetic-resin member 12 may be formed to partially fill the spacing S so as to allow for the skew of the pin 3.
This assuredly prevents the link plates adjoining each other in the chain widthwise direction W from directly contacting each other. Therefore, the decrease of power transmission efficiency of the chain 1 is more assuredly prevented.

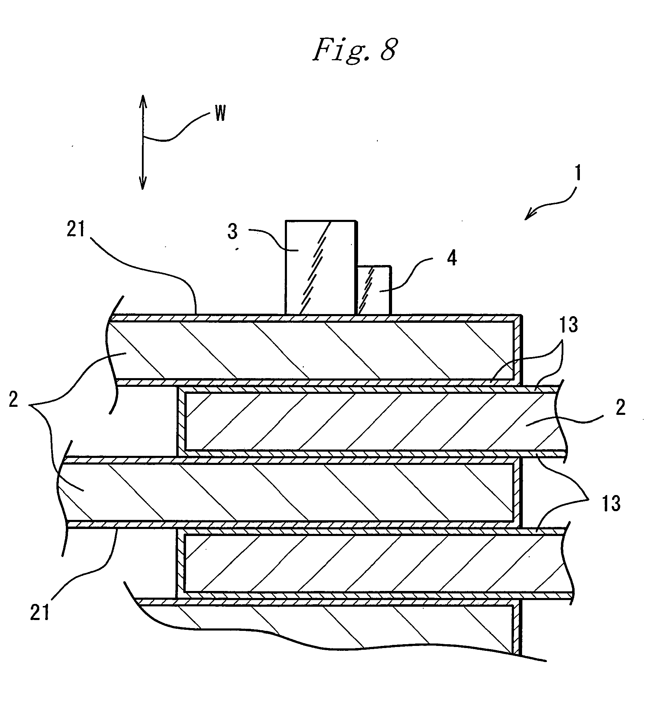

FIG. 8 is a sectional view schematically showing an interconnection portion of a chain for use in chain-type continuously variable transmission according to a second embodiment of the invention. This embodiment principally differs from the first embodiment in that the surface of the link plate 2 is covered by a coating material 13 which is formed by subjecting the link plate 2 to a zinc-phosphate coating process followed by a stearate lubrication coating process, and in that the plural link plates 2 are arranged as mutually overlapped in a thicknesswise direction thereof in a manner that a respective pair of link plates 2 adjoining each other in the chain widthwise direction W contact each other on outside surfaces of their coating materials overlaid thereon. Except for these, this embodiment is constituted the same way as the first embodiment and hence, the redundant description is dispensed with.

The surface of the link plate 2 shown in the figure is covered by the coating material 13 which is formed by the steps of forming an overcoat by a zinc phosphate process and subjecting the overcoat to a lubrication coating process. The coating material 13 may be formed by the following procedure. The link plate 2 formed by working a material into a predetermined shape and subjected to a predetermined heat treatment is first degreased. The resultant link plate 2 is dipped in a zinc-phosphate treating agent so as to overlay a zinc phosphate coating thereon. The link plate 2 is drawn out of the treating agent and then, is dipped in a treating agent for stearate lubrication coating. Subsequently, the link plate 2 is drawn out of the treating agent and dried. Thus, the coating material 13 is substantially overlaid on the overall surface of the link plate 2. In this embodiment, the thickness of the coating material 13 is defined to be about 3µm.

The link plate 2 coated as described above is overlapped on its adjoining link plate on its side surface, the link plates adjoining each other in the chain widthwise direction W. Thus, these link plates partially contact each other on outside surfaces 21 of the coating materials thereof. Accordingly, the coating material 13 is interposed between the confronting surfaces 10 of the adjoining link plates 2.

According to the chain 1 of the embodiment of the above arrangement, the surface of the link plate 2 is covered by the coating material 13 so that the coating material 13 may be interposed between the contact surfaces of the link plates 2 arranged as mutually overlapped on their side surfaces in the thicknesswise direction thereof and flexibly interconnected. This provides the following advantage even in a case where the link plates are assembled as mutually overlapped with high surface pressure to form the chain 1. That is, the flexed power transmission chain causes the side surfaces of the link plates to abrade against each other whereby the coating material is abraded or separated. Hence, the pressure on the contact surface between the link plates may be reduced. In other words, the chain is adapted to control the contact surface pressure to a proper level even if the link plates 2 are mutually overlapped with high surface pressure. This leads to a decreased friction force on the contact surface between the link plates 2 such that the chain 1 may be decreased in the flexion torque. As a result, the chain 1 is prevented from suffering the decrease of power transmission efficiency.

The coating material formed by the zinc-phosphate coating process followed by the stearate lubrication coating process is used as the coating material 13 of the chain 1 according to the embodiment. The coating material formed by the zinc-phosphate coating process followed by the stearate lubrication coating process has a property of being readily abraded under sliding friction such as to provide a consistent slide surface quickly. Thus, the coating material 13 defining the contact surface between the flexibly interconnected link plates 2 may be readily abraded in a small number of flexions of the chain so as to provide the consistent slide surface permitting the link plates 2 to be smoothly flexed. Therefore, the contact surface pressure between the link plates 2 may be quickly reduced by test-driving the chain 1. Furthermore, the coating material 13 is also imparted with a lubricating ability by the stearate lubrication coating process and hence, the friction force on the contact surface between the link plates 2 may be further reduced.

The embodiment employs the coating material 13 formed by the zinc-phosphate coating process followed by the stearate lubrication coating process. Alternatively, the coating material may be formed by a manganese-phosphate coating process, for example. A coating material formed by the manganese-phosphate coating process provides a friction surface having as good initial drapability against sliding friction as that of the coating material 13 of the embodiment. Furthermore, this coating material also has the property of readily abrading away on its surface.
While the embodiment defines the thickness of the coating material 13 to be on the order of about 3 µm, the thickness may preferably be in the range of 2 µm to 20 µm. If the coating material 13 has a thickness in excess of the above range, a widthwise dimension of the chain 1 exceeds a tolerance of a design value. If the thickness of the coating material is below the above range, the coating material may fail to fully reduce the contact surface pressure between the link plates 2.
While the above embodiment applies the coating material 13 substantially on the overall surface of the link plate 2, the coating material need be applied to at least either one of the contact surfaces of the adjoining link plates 2 overlapped on each other in the thicknesswise direction thereof. In this case, as well, the aforementioned working effect may be obtained because the coating material 13 may be interposed between the contact surfaces of the link plates.

Examples of the other preferred coating material than the above include plated zinc, plated tin, plated copper, paint, coated resin and the like. These materials are more prone to abrade than the material constituting the link plate 2, such as carbon steel, or have such a low adhesion as to be easily separated. What is more, these materials are capable of retaining a predetermined thickness as subjected to a surface pressure from the link plate 2. The application of the coating material having the lubricating ability is effective to further reduce the friction force on the contact surface between the mutually overlapped link plates 2, so that the chain 1 may be further reduced in the flexion torque.

Next, description is made on the method of manufacturing the power transmission chain according to the embodiment of the invention. The chain 1 of the embodiment is manufactures by the following three steps which include: a coating step of coating the side surface of the link plate 2 with the coating material 13; a link-plate layout step of laying out the plural link plates 2 at predetermined positions and in overlapping relation with respect to the thicknesswise direction, so as to form a layout corresponding to the chain 1; and an interconnection step of inserting the pins 3 through the through-holes 7 thereby interconnecting the link plates thus arranged.
Firstly, the link plates 2 have their surfaces covered by the coating material 13 (see FIG. 8) which is formed by forming an overcoat by the zinc-phosphate coating process followed by the stearate lubrication coating process (the coating step).

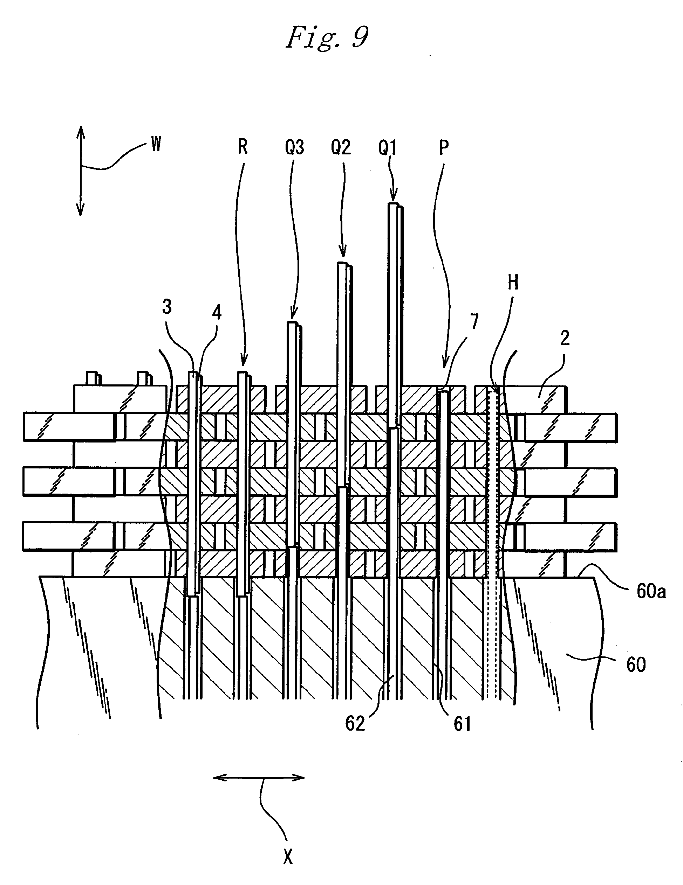

FIG. 9 is a schematic diagram showing how the pin 3 is press-inserted through the through-holes 7 of the link plates 2 according the manufacture method for chain 1 of the embodiment. In the figure, the plural link plates 2 covered by the coating material 13 are stacked on a top surface 60a of a chain assembly table 60 as partially overlapped with one another in the thicknesswise direction thereof (the chain widthwise direction W) and in the longitudinal direction thereof (the chain advancing direction X) (link-plate lay-out step).

The table 60 is formed with a plurality of holes 61 which are arranged at the same pitch as a pitch width between the pins 3 of the chain 1. A vertically movable guide pin 62 is mounted in each of the holes 61. The guide pin 62 projects vertically upwardly from the top surface 60a of the table 60 by a length substantially equal to the width of the chain 1. The guide pin 62 is designed to be retracted into the hole 61 when a vertically downward force is applied thereto. The guide pin 62 is configured to have such a section as to ensure the alignment of the through-holes 7 when the guide pin is inserted through the through-holes 7 and as to provide for easy insertion and withdrawal of the guide pin.
The guide pins 62 are inserted through the through-holes 7 of the link plates 2 laid on the top surface 60a of the table 60, whereby the link plates 2 are retained as arranged in the same state as that of a completed chain 1. That is, these link plates 2 are temporarily assembled on the top surface 60a of the table 60 in order that a completed state of the chain 1 may be established by merely inserting the pins 3 and strips 4 through the through-holes of the link plates.

A pair of pin 3 and strip 4 approach from above so as to be press-fitted or loose fitted into the through-holes 7 of the link plates 2 temporarily assembled in the same state as that of the chain 1. At this time, the guide pin 62 is pushed downward by the pair of pin 3 and strip 4, thus progressively retracted into the hole 61 (interconnection step). The details of this process are described as below.
A state P, states Q1 to Q3 and a state R in FIG. 9 sequentially show the moment-to-moment changes of a positional relation between the pin 3/strip 4 pair and the guide pin 62 when the pin 3/strip 4 pair is inserted into the through-holes 7. FIG. 3 (sic) shows the state P, the states Q1 to Q3 and the state R in one drawing for convenience of the explanation of the aforesaid moment-to-moment changes of the positional relation.
Prior to the insertion of the pin 3 and strip 4, the guide pin 62 is inserted through the plural through-holes 7 of the plural link plates 2 arranged in the overlapping relation thereby vertically aligning the individual link plates, as indicated by the state P. The guide pin retains these link plates in the temporarily assembled state, while positioning these link plates in the same layout as that of the completed chain 1. On the other hand, the plural through-holes 7 are vertically aligned thereby defining one through-hole H apparently extending through the chain 1 in the widthwise direction thereof.

As indicated by the states Q1 to Q3, the pin 3 and strip 4 are progressively inserted into the through-hole H from its upper side toward its lower side, while the guide pin 62 is vertically downwardly pushed by the ends of the pin 3 and strip 4 so as to be progressively retracted into the hole 61. The pin 3 and strip 4 are inserted to penetrate through the through-hole H, as indicated by the state R. Thus, the guide pin 62 is completely received in the hole 61, whereas the pin 3 and strip 4 inserted into the through-hole A (sic) interconnect the link plates 2 arranged in the overlapping relation.
In this manner, the plural link plates 2 may be collectively interconnected at a time by inserting a pair of pin 3 and strip 4 through the plural through-holes 7 (through-hole H) vertically aligned by the guide pin 62. The same procedure may be taken to insert individual pairs of pins 3 and strips 4 into other through-holes H, whereby the chain 1 is assembled.

According to the manufacture method for chain 1 of the above embodiment, the surfaces of the link plates 2 are covered by the coating material 13 before the pin 3 and strip 4 are inserted through the through-holes 7. Hence, the coating material 13 may be interposed between the contact surfaces of the link plates 2 mutually overlapped and flexibly interconnected. Thus, the contact surface pressure may be controlled to the proper level even if the link plates 2 are mutually overlapped with high surface pressure. This provides for the decrease of friction force on the contact surface between the link plates 2 such that the chain 1 may be decreased in the flexion torque. That is, the method of manufacturing the power transmission chain provides the chain 1 adapted to suppress the decrease of power transmission efficiency.
Furthermore, the coating material 13 serves to decrease the surface pressure between the adjoining link plates 2 even if the surface pressure is increased. Therefore, the chain 1 may be assembled without finely adjusting the pressure or stroke of the pin 3 inserted into the through-holes 7. Therefore, the chain 1 may be assembled easily.

In addition, the manufacture method for chain 1 according to the embodiment negates the need for adjusting the surface pressure of the link plates during the insertion of the pin. Therefore, a required number of link plates for defining the width of the chain 1 may be arranged as mutually overlapped in the thicknesswise direction thereof and then, the pin 3 and strip 4 may be inserted through the through-holes 7 (through-hole H) of the plural link plates so overlapped. Hence, the plural link plates 2 may be collectively interconnected by press-inserting a single pin so that the chain 1 may be assembled efficiently.

For temporarily assembling the chain 1, the above embodiment adopts the method of previously inserting the guide pin through the through-holes 7. However, any method may be adopted for manufacturing the chain 1 of the embodiment so long as the method is adapted to align the link plates 2 arranged in the overlapping relation with respect to the thicknesswise direction thereof thereby permitting the pin 3 and the like to be inserted through the through-holes 7. According to the above embodiment, the link plates 2 constituting the whole body of the chain 1 are temporarily assembled before the insertion of the pins 3 and strips 4. Alternatively, some of the link plates 2 constituting the chain 1 may be temporarily assembled and the pin 3 and the like may be inserted therethrough.

According to the above embodiment, the coating step is followed by the link-plate lay-out step to lay out the link plates at the predetermined positions. Subsequently, the link plates are interconnected. However, the chain may also be assembled by a method, for example, which includes: the coating step; a pin lay-out step of laying out the plural pins 3 at a predetermined pitch; and an interconnection step of inserting the individual pins 3 so arranged into the respective through-holes 7 of the plural link plates 2 thereby sequentially interconnecting the link plates which are mutually overlapped on their side surfaces. This method is also adapted to interpose the coating material 13 between the contact surfaces of the link plates 2 mutually overlapped and flexibly interconnected. Hence, the chain 1 may be assembled easily.

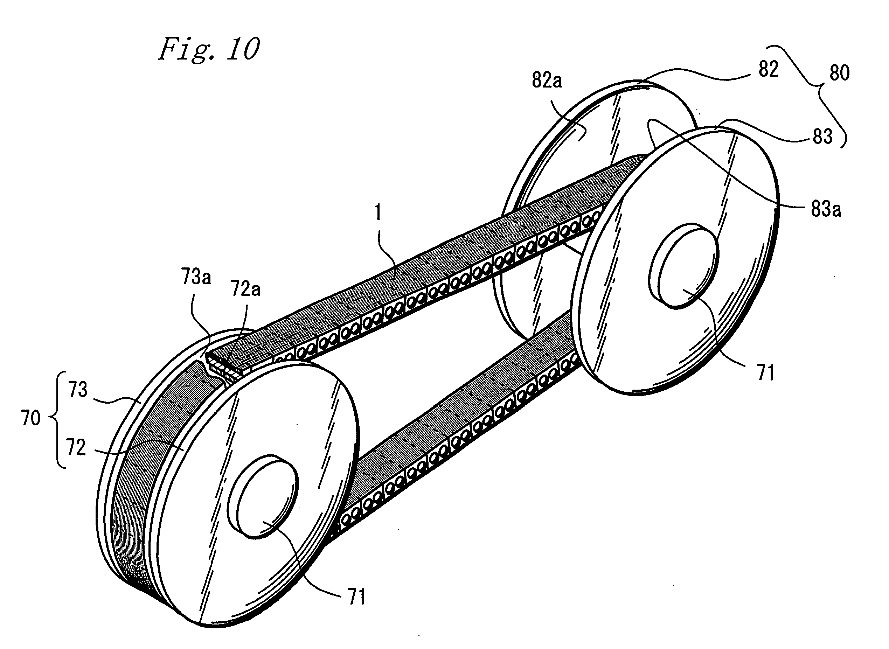

FIG. 10 is a perspective view schematically showing an arrangement of an essential part of a chain-type continuously variable transmission (hereinafter, also referred to simply as "continuously variable transmission") according to a third embodiment of the invention. The continuously variable transmission is a power transmission assembly. The continuously variable transmission of the embodiment is mounted in a vehicle such as automotive vehicles and includes: a drive pulley 70 formed from a metal (steel for machine structural use, etc.) and serving as a first pulley; a driven pulley 80 formed from a metal (steel for machine structural use, etc.) and serving as a second pulley; and an endless chain 1 entrained between these pulleys 70, 80. FIG. 10 depicts the chain 1 partly in section for the sake of clarity.

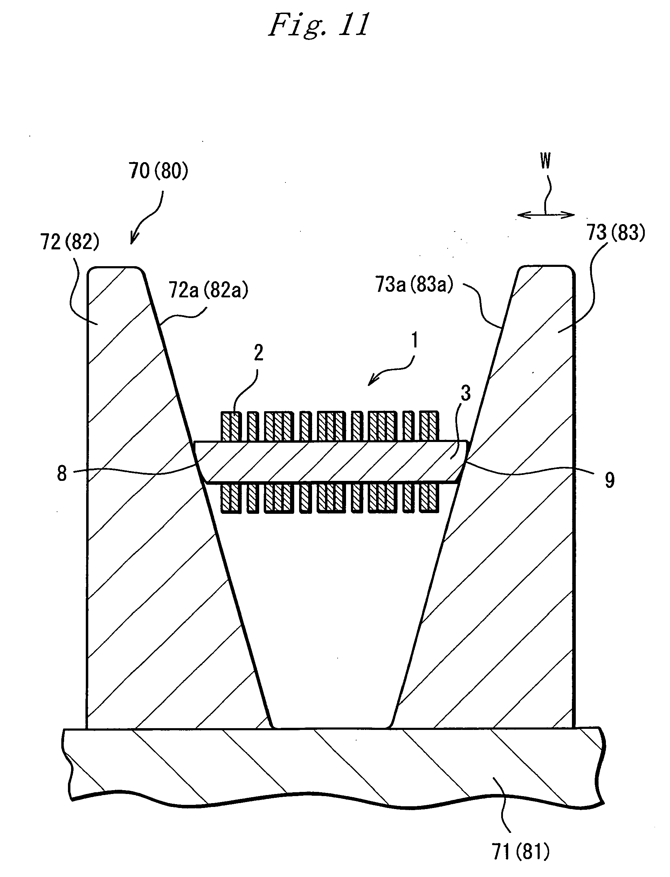

FIG. 11 is a fragmentary enlarged sectional view of the drive pulley 70 (driven pulley 80) and the chain 1 of the chain-type continuously variable transmission shown in FIG. 10. Referring to FIG. 10 and FIG. 11, the drive pulley 70 is mounted to an input shaft 71 coupled to a drive source of the vehicle for transmitting the power. The drive pulley includes a fixed sheave 72 and a movable sheave 73. The fixed sheave 72 and the movable sheave 73 possess a respective pair of sheave surfaces 72a, 73a opposing each other. The sheave surfaces 72a, 73a each include a conical inclined surface. Each pair of sheave surfaces 72a, 73a define a groove therebetween, in which the chain 1 is retained as clamped with high pressure.

The movable sheave 73 is connected with a hydraulic actuator (not shown) for varying the groove width. At shift transmission, the movable sheave 73 is moved in an axial direction of the input shaft 71 (transverse directions as seen in FIG. 11) so as to vary the groove width. Thus, the chain 1 is allowed to move in a radial direction of the input shaft 71 (vertical directions as seen in FIG. 11) for varying the radius of the chain 1 (effective radius) looped over the input shaft 71.

On the other hand, the driven pulley 80 is unitarily rotatably mounted to an output shaft 81 coupled to drive wheels (not shown) for transmitting the power to the wheels. Similarly to the drive pulley 70, the driven pulley includes a fixed sheave 82 and a movable sheave 83 which possess sheave surfaces 82a, 83a, respectively. These sheave surfaces define a groove therebetween, in which the chain 1 is retained as clamped with high pressure. Similarly to the movable sheave 73 of the drive pulley 70, the movable sheave 83 of the driven pulley 80 is connected with a hydraulic actuator (not shown) for moving the movable sheave 83 so as to vary the groove width at shift transmission. Thus, the chain 1 is allowed to move to vary the radius of the chain 1 (effective radius) looped over the output shaft 81.

The continuously variable transmission according to the embodiment of the above arrangement is designed to accomplish stepless speed change in the following manner, for example. Specifically, the number of revolutions of the output shaft 81 may be decreased as follows. The movable sheave 73 is moved to increase the groove width of the drive pulley 70, so that the chain 1 is allowed to move inwardly of the conical sheave surfaces 72a, 73a (downward direction as seen in FIG. 11) as slidably contacting the sheave surfaces at the power transmission surfaces 8, 9 defined by the opposite ends thereof under a boundary lubrication condition (lubricating condition wherein two contacting surfaces are directly in microspike-to-microspike contact at some portions thereof but contact each other via a lubricant film at the reminder portions thereof), whereby the radius of the chain 1 looped over the input shaft 71 is decreased. At the driven pulley 80, on the other hand, the movable sheave 83 is moved to decrease the groove width, so that the chain 1 is allowed to move outwardly of the conical sheave surfaces 82a, 83a as slidably contacting the sheave surfaces at the power transmission surfaces 8, 9 thereof under the boundary lubrication condition, whereby the radius of the chain 1 looped over the output shaft 81 is increased.

Conversely, the number of revolutions of the output shaft 81 is increased as follows. The movable sheave 73 is moved to decrease the groove width of the drive pulley 70, so that the chain 1 is allowed to move outwardly of the conical sheave surfaces 72a, 73a (upward direction as seen in FIG. 11) as slidably contacting the sheave surfaces at the power transmission surfaces 8, 9 thereof under the boundary lubrication condition, whereby the radius of the chain 1 looped over the input shaft 71 is increased. At the driven pulley 80, on the other hand, the movable sheave 83 is moved to increase the groove width, so that the chain 1 is allowed to move inwardly of the conical sheave surfaces 82a, 83a as slidably contacting the sheave surfaces at the power transmission surfaces 8, 9 thereof under the boundary lubrication condition, whereby the radius of the chain 1 looped over the output shaft 81 is decreased.

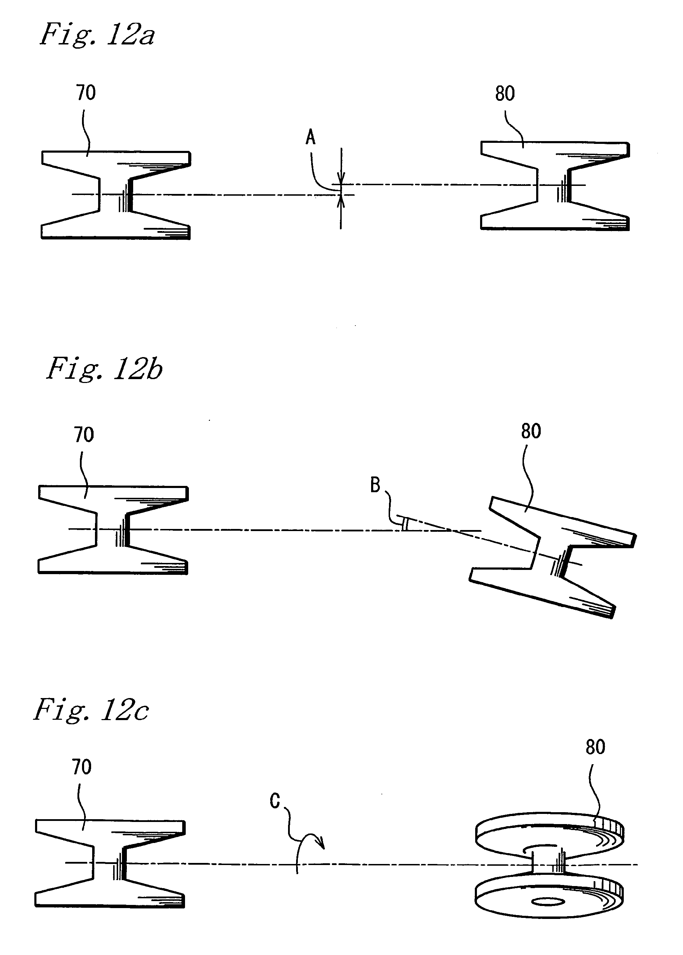

Accordingly, the embodiment may provide the power transmission assembly capable of suppressing the decrease of power transmission efficiency.
In the case where the spacing S is provided between the link plates 2 adjoining each other in the chain widthwise direction W, the pin 3 is allowed to move in the chain widthwise direction W. Therefore, if misalignment occurs due to deviation between the relative positions of the drive pulley 70 and the driven pulley 80, or specifically, if the drive pulley 70 and the driven pulley 80 is displaced relative to each other with respect to the horizontal direction (direction orthogonal to the power transmission direction) to cause misalignment A as shown in FIG. 12A; if the drive pulley 70 and the driven pulley 80 are oriented in mutually different directions to cause misalignment B as shown in FIG. 12B; or if the drive pulley 70 and the driven pulley 80 are swirled relative to each other to cause misalignment C as shown in FIG. 12C, the pin 3 is allowed to move (skew) in the chain widthwise direction W to accommodate such a misalignment. As a result, the pin 3 is prevented from pressing its corner against the corresponding sheave surface 62a (sic), 63a (sic), 72a, 73a to cause abnormal wear of the pin and the sheave surface. Thus, the chain may be dramatically increased in service life.

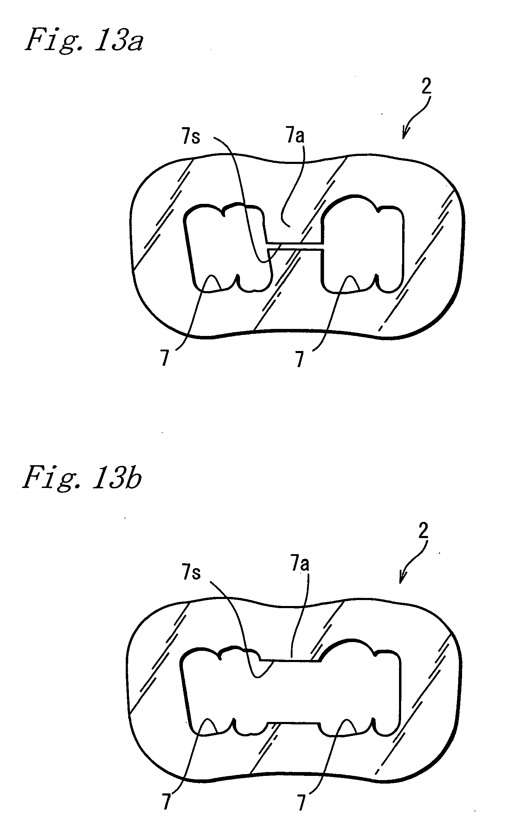

It is to be noted that the invention is not limited to the foregoing embodiments. For instance, the link plate 2 of the power transmission chain 1 illustrated by the foregoing embodiments is formed with two through-holes 7. The link plate may also be formed with a communication groove (slit) 7s for communicating these two through-holes 7 with each other, as shown in FIG. 13. In the link plate 2 shown in FIG. 13, the communication groove 7s is formed in a manner to transect a column portion 7a between the through-holes 7 in a longitudinal direction of the link plate.
The provision of such a communication groove 7s facilitates the deformation of the link plate 2 such that stress concentration on a peripheral area of the through-holes may be reduced when the link plate is subjected to a great force from the pin 3 and the strip 4. Thus, the link plate may be increased in durability. The chain with the pins and strips press-fitted in the link plates particularly benefits from the effect to reduce the stress concentration.

The communication groove 7s is disposed substantially centrally of the through-holes 7 with respect to a widthwise direction of the link plate. FIG. 13A illustrates a modification wherein the communication groove 7s has a relatively small width, whereas FIG. 13B illustrates a modification wherein the communication groove 7s has a relatively great width. If the communication groove 7s has a small width, the link plate has a higher rigidity than the link plate wherein the communication groove has a great width. This prevents the deformation of the link plate being produced by punching. If the communication groove 7s has a great width, the link plate is more liable to deformation as compared with the link plate wherein the communication groove has the narrow width. Hence, the effect to reduce the stress concentration is further increased. The width of the communication groove 7s may be decided properly according to the dimensions of the link plate, load conditions and the like.

The power transmission assembly of the invention is not limited to the mode wherein both of the drive pulley 70 and the driven pulley 80 are varied in the groove width. The invention may also be practiced in a mode wherein either one of the pulleys is varied in the groove width whereas the other pulley has a fixed groove width. While the foregoing embodiment illustrates the mode wherein the groove width is continuously varied (stepless variation), the invention may also be applied to other power transmission assemblies wherein the groove width is varied stepwise or the groove width is fixed (non-variable speed pulleys).

While the foregoing embodiments illustrate the examples wherein the power transmission surfaces (end faces) 8, 9 of the pins 3 contact the corresponding sheave surfaces 72a, 73a, 82a, 83a for power transmission, the power transmission assembly may also employ an alternative chain wherein the chain component member such as the pin or link plate is provided with another power transmission member such as a power transmission block having a power transmission surface.

## Claims

1. A power transmission chain comprising:
a plurality of link plates individually including through-holes and arranged in a chain advancing direction and a chain widthwise direction and with predetermined spacing; and
a plurality of pins inserted through the through-holes for flexibly interconnecting the plural link plates.

2. A power transmission chain according to Claim 1, wherein a synthetic resin member is interposed in the spacing.

3. A power transmission chain comprising:
a plurality of link plates individually including through-holes, having their side surfaces covered by a coating material capable of being abraded or separated by using the chain, and arranged as mutually overlapped in a thicknesswise direction thereof; and
a plurality of pins inserted through the through-holes for flexibly interconnecting the plural link plates.

4. A power transmission chain according to Claim 3, wherein the coating material comprises a phosphate coating film.

5. A method of manufacturing a power transmission chain including: a plurality of link plates individually including through-holes and arranged in a chain advancing direction and a chain widthwise direction; and a plurality of pins inserted through the through-holes for flexibly interconnecting the plural link plates, the method comprising:
a layering step of layering the link plates as interposing a space regulating member between a respective pair of adjoining link plates;
an interconnection step of interconnecting the plural link plates by inserting the pins through the through-holes; and
a removal step of removing the space regulating members.

6. A method of manufacturing a power transmission chain including: a plurality of link plates individually including through-holes and arranged as mutually overlapped in a thicknesswise direction thereof on their side surfaces; and a plurality of pins inserted through the through-holes for flexibly interconnecting the plural link plates, the method comprising:
a coating step of coating the side surfaces of the plural link plates with a coating material capable of being abraded or separated by using the chain;
a pin lay-out step of laying out the plural pins at a predetermined pitch; and
an interconnection step of inserting the plural pins so arranged into the through-holes thereby sequentially interconnecting the link plates which are mutually overlapped on their side surfaces.

7. A method of manufacturing a power transmission chain including: a plurality of link plates individually including through-holes and arranged as mutually overlapped in a thicknesswise direction thereof on their side surfaces; and a plurality of pins inserted through the through-holes for flexibly interconnecting the plural link plates, the method comprising:
a coating step of coating the side surfaces of the link plates with a coating material capable of being abraded or separated by using the chain;
a link-plate lay-out step of laying out the plural link plates at predetermined positions and in overlapping relation with respect to the thicknesswise direction thereof; and
an interconnection step of interconnecting the plural link plates located at the predetermined positions by inserting the pins through the through-holes.

8. A power transmission assembly comprising:
a first and a second pulley each possessing a pair of conical sheave surfaces opposing each other; and
the power transmission chain according to Claim 1 entrained between these pulleys and contacting the sheave surfaces for power transmission.

9. A power transmission assembly comprising:
a first and a second pulley each possessing a pair of conical sheave surfaces opposing each other; and
the power transmission chain according to Claim 2 entrained between these pulleys and contacting the sheave surfaces for power transmission.

10. A power transmission assembly comprising:
a first and a second pulley each possessing a pair of conical sheave surfaces opposing each other; and
the power transmission chain according to Claim 3 entrained between these pulleys and contacting the sheave surfaces for power transmission.

11. A power transmission assembly comprising:
a first and a second pulley each possessing a pair of conical sheave surfaces opposing each other; and
the power transmission chain according to Claim 4 entrained between these pulleys and contacting the sheave surfaces for power transmission.
